# EUROPEAN PATENT SPECIFICATION

(11) **EP 1 345 999 B1**
(45) Date of publication and mention of the grant of the patent: **13.04.2016**
(21) Application number: 01273637.7
(22) Date of filing: 06.12.2001
(51) Int. Cl.: C09D 7/12, C09D 5/03, C09D 133/04, C09D 175/04, C09D 167/00, C08K 3/00, C08K 3/04, C08K 3/14, C08K 3/22

(54) **CURABLE POWDER COATING COMPOSITIONS PROVIDING IMPROVED MAR AND SCRATCH RESISTANCE AND METHODS OF USING THE SAME**
HÄRTBARE PULVERBESCHICHTUNGSZUSAMMENSETZUNGEN MIT VERBESSERTER KRATZFESTIGKEIT UND VERFAHREN ZUR VERWENDUNG DERSELBEN
COMPOSITION DE REVÊTEMENT EN POUDRE DURCISSABLE A RESISTANCE A L'ENDOMMAGEMENT ET A RESISTANCE AUX RAYURES AMELIOREES ET PROCEDES D'UTILISATION DE CELLES-CI

(30) Priority: 08.12.2000 US 254143 P; 05.12.2001 US 7149
(43) Date of publication of application: 24.09.2003
(73) Proprietor: PPG Industries Ohio, Inc., Cleveland, OH 44111 (US)
(72) Inventor: SCHNEIDER, John R., Glenshaw, PA 15116 (US); RAGAN, Deirdre D., Gibsonia, PA 15044 (US); RECHENBERG, Karen S., Gibsonia, PA 15044 (US); CHASSER, Anthony M., Allison Park, PA 15101 (US); BARKAC, Karen A., North Huntingdon, PA 15642 (US)
(74) Representative: f & e patent
(86) International application number: PCT/US2001/046960
(87) International publication number: WO 2002/081579

(56) References cited:
- EP-A- 0 106 707
- EP-A- 0 379 746
- EP-A- 0 737 567
- EP-A- 1 038 927
- WO-A-00/52105
- DE-A- 4 304 491
- DE-A- 19 845 496
- GB-A- 2 316 069
- US-A- 4 356 037
- US-A- 4 650 819
- US-A- 5 348 914
- US-A- 5 907 006

## Description

### FIELD OF THE INVENTION

The present invention relates to coating compositions that provide improved mar and/or scratch resistance and to methods for using the same. More specifically, the improved resistance is achieved by adding particles to a film forming resin.

### BACKGROUND OF THE INVENTION

"Color-plus-clear" coating systems involving the application of a colored or pigmented basecoat to a substrate followed by application of a transparent or clearcoat over the basecoat have become increasingly popular as original finishes for a number of consumer products including, for example, cars and floor coverings such as ceramic tiles and wood flooring. The color-plus-clear coating systems have outstanding appearance properties such as gloss and distinctness of image, due in large part to the clear coat.

"One coat" systems comprising a one coat color layer are applied themselves as the topcoat. One coat systems are frequently used for household appliances, lawn and garden equipment, interior fixtures, and the like.

In recent years, powder coatings have become increasingly popular because these coatings are inherently low in volatile organic content (VOC), which significantly reduces air emissions during the application and curing processes. Liquid coatings are still used in many systems, however, particularly those wherein solvent emissions are permitted. For example, the coating of elastomeric automotive parts is often done by spraying liquid compositions. Many of these compositions are formulated to be flexible so the coating can bend or flex with the substrate without cracking. Because these coatings can result in films that are softer, they may be more susceptible to marring and scratching.

Topcoat film-forming compositions, such as the protective and/or decorative one coats for household appliances and the transparent clearcoat in color-plus-clear coating systems for automotive applications, are subject to defects that occur during the assembly process and damage from both the environment and normal use of the end product. Paint defects that occur during assembly include the paint layer being too thick or too thin, "fish eyes" or craters, and under-cured or over-cured paint; these defects can affect the color, brittleness, solvent resistance and mar and scratch performance of the coating. Damaging environmental factors include acidic precipitation, exposure to ultraviolet radiation from sunlight, high relative humidity and high temperatures; these factors can also result in compromised performance. Normal use of consumer products will often lead to marring, scratching and/or chipping of the surface due to contact with hard objects, contact with brushes and/or abrasive cleansers during normal cleaning processes, and the like.

EP-A 379 746 relates to a coating composition comprising tetrapod-like zinc oxide whiskers each comprising a central nuclear portion from which 4 crystalline needles are outwardly extended each in different directions. The average diameter of said needle measured at the foot portion is 0.7 to 14 µm and the average length of said needles is 3 to 300 µm.

EP-A 1 038 927 discloses a coating composition comprising a film-forming resin and a filler having an average particle size in a range of 3 to 100 µm.

US 5,907,006 relates to coating compositions comprising matting agents which are predominantly in the form of terephthalic acid dianilide or derivatives thereof in form of needles or flakes of average length of between 1 and 200 µm and of aspect ratio of between 10 and 40.

Thus, there is a need in the coatings art for topcoats having good scratch and mar resistance, including those in which flexibility would also be desired.

### SUMMARY OF THE INVENTION

The present invention is directed to a curable powder coating composition comprising:
a film-forming resin comprising at least one polymer having at least one type of reactive functional group and a curing agent having functional groups reactive with the functional group of the polymer; and
a plurality of inorganic particles selected from alumina particles having an average particle size between 0.1 and 6 µm and silicon carbide particles having an average particle size between 0.1 and 10 µm dispersed in said resin in an amount of 0.1 to 8 weight percent based on the total weight of the coating composition.

Methods for using these compositions are also within the scope of the invention, as are articles coated according to these methods.

It has been surprisingly discovered that the incorporation of particles into a film-forming resin results in coatings having enhanced mar and/or scratch resistance as compared with the same coatings lacking these particles. According to the present invention, coatings can be formulated with these improved mar and/or scratch characteristics without affecting the appearance or other mechanical properties of the coatings.

"Mar" and "scratch" refer herein to physical deformations resulting from mechanical or chemical abrasion. "Mar resistance" is a measure of a material's ability to resist appearance degradation caused by small scale mechanical stress. "Scratch resistance" is the ability of a material to resist more severe damage that can lead to visible, deeper or wider trenches. Thus, scratches are generally regarded as being more severe than what is referred to in the art as mar, and the two are regarded in the art as different. As noted above, mar and scratch can result from manufacturing and environmental factors as well as through normal use. Although mar and scratch are in many respects differing degrees of the same thing, a coating that improves mar resistance may not be effective in improving scratch resistance, and vice versa. It will be appreciated, therefore, that combinations of particles can be employed to give the final coating its desired characteristics. For example, one particle that offers particularly good mar resistance can be coupled with one that offers particularly good scratch resistance.

### DESCRIPTION OF THE INVENTION

The present invention is directed to a coating comprising a film-forming resin and a plurality of particles dispersed in the resin.

Any resin that forms a film and comprises at least one polymer having at least one type of reactive functional group and a curing agent having functional groups reactive with the functional group of the polymer can be used according to the present methods, absent compatibility problems. For example, resins suitable for both powder and liquid coating compositions can be employed.

A particularly suitable resin for use in the present powder compositions is one formed from the reaction of a polymer having at least one type of reactive functional group and a curing agent having functional groups reactive with the functional group of the polymer. The polymers can be, for example, acrylic, polyester, polyether or polyurethane, and can contain functional groups such as hydroxyl, carboxylic acid, carbamate, isocyanate, epoxy, amide and carboxylate functional groups.

The use in powder coatings of acrylic, polyester, polyether and polyurethane polymers having hydroxyl functionality is known in the art. Monomers for the synthesis of such polymers are typically chosen so that the resulting polymers have a glass transition temperature ("T_{g}") greater than 50°C. Examples of such polymers are described in U.S. Patent No. 5,646,228 at column 5, line 1 to column 8, line 7.

Acrylic polymers and polyester polymers having carboxylic acid functionality are also suitable for powder coatings. Monomers for the synthesis of acrylic polymers having carboxylic acid functionality are typically chosen such that the resulting acrylic polymer has a T_{g} greater than 40°C, and for the synthesis of the polyester polymers having carboxylic acid functionality such that the resulting polyester polymer has a T_{g} greater than 50°C. Examples of carboxylic acid group-containing acrylic polymers are described in U.S. Patent No. 5,214,101 at column 2, line 59 to column 3, line 23. Examples of carboxylic acid group-containing polyester polymers are described in U.S. Patent No. 4,801,680 at column 5, lines 38 to 65.

The carboxylic acid group-containing acrylic polymers can further contain a second carboxylic acid group-containing material selected from the class of C₄ to C₂₀ aliphatic dicarboxylic acids, polymeric polyanhydrides, low molecular weight polyesters having an acid equivalent weight from about 150 to about 750, and mixtures thereof. This material is crystalline and is preferably a low molecular weight crystalline carboxylic acid group-containing polyester.

Also useful in the present powder coating compositions are acrylic, polyester and polyurethane polymers containing carbamate functional groups. Examples are described in WO Publication No. 94/10213. Monomers for the synthesis of such polymers are typically chosen so that the resulting polymer has a high T_{g}, that is, a T_{g} greater than 40°C. The T_{g} of the polymers described above can be determined by differential scanning calorimetry (DSC).

Suitable curing agents generally include blocked isocyanates, polyepoxides, polyacids, polyols, anhydrides, polyamines, aminoplasts and phenoplasts. The appropriate curing agent can be selected by one skilled in the art depending on the polymer used. For example, blocked isocyanates are suitable curing agents for hydroxy and primary and/or secondary amino group-containing materials. Examples of blocked isocyanates are those described in U.S. Patent No. 4,988,793, column 3, lines 1 to 36. Polyepoxides suitable for use as curing agents for COOH functional group-containing materials are described in U.S. Patent No. 4,681,811 at column 5, lines 33 to 58. Polyacids as curing agents for epoxy functional group-containing materials are described in U.S. Patent No. 4,681,811 at column 6, line 45 to column 9, line 54. Polyols, materials having an average of two or more hydroxyl groups per molecule, can be used as curing agents for NCO functional group-containing materials and anhydrides, and are well known in the art. Polyols for use in the present invention are typically selected such that the resultant material has a T_{g} greater than about 50°C.

Anhydrides as curing agents for epoxy functional group-containing materials include, for example, trimellitic anhydride, benzophenone tetracarboxylic dianhydride, pyromellitic dianhydride, tetrahydrophthalic anhydride, and the like as described in U.S. Patent No. 5,472,649 at column 4, lines 49 to 52. Aminoplasts as curing agents for hydroxy, COOH and carbamate functional group-containing materials are well known in the art. Examples of such curing agents include aldehyde condensates of glycoluril, which give high melting crystalline products useful in powder coatings. While the aldehyde used is typically formaldehyde, other aldehydes such as acetaldehyde, crotonaldehyde, and benzaldehyde can be used.

The film-forming resin described above is generally present in the present powder coating compositions in an amount greater than about 50 weight percent, such as greater than about 60 weight percent, and less than 90 weight percent, with weight percent being based on the total weight of the composition. For example, the weight percent of resin can be between 60 and 70 weight percent. When a curing agent is used, it is generally present in an amount of between about 10 and 40 weight percent; this weight percent is also based on the total weight of the coating composition.

The present compositions can be formed from film-forming resins that are liquid, that is, water-borne or solvent-borne systems. Organic solvents in which the present coatings may be dispersed include, for example, alcohols, ketones, aromatic hydrocarbons, glycol ethers, esters or mixtures thereof. Examples of polymers useful in forming the resin in the liquid coatings of the present invention include hydroxyl or carboxylic acid-containing acrylic copolymers, hydroxyl or carboxylic acid-containing polyester polymers, oligomers and isocyanate or hydroxyl-containing polyurethane polymers, and amine or isocyanate-containing polyureas. These polymers are further described in U.S. Patent No. 5,939,491, column 7, line 7 to column 8, line 2; this patent. Curing agents for these resins are also described in the '491 patent at column 6, line 6 to line 62. In solvent-based compositions, the solvent is generally present in amounts ranging from 5 to 80 weight percent based on total weight of the composition, such as 30 to 50 percent.

Particles according to the present invention can be selected from silicon carbide and aluminaMixtures of any of the above particles can be used. The alumina can be used in any of its forms, such as alpha, beta, gamma, delta, theta, tabular alumina, and the like and can be fused or calcined, and if calcined, ground or unground. Alpha alumina having a crystalline structure is particularly suitable for clear coats used in the automotive industry.

The particles listed above are widely commercially available. In some embodiments, it might be desirable to heat treat the particles before incorporating them into the present compositions. Heat treating can be accomplished, for example, by heating the particles at a temperature of between about 350°C and 2000°C, such as 600°C and 1000°C for a time period of two to three hours.

Alumina particles used in the present invention have an average particle size between 0.1 and 6 µm and silicon carbide particles used in the present invention have an average particle size between 0.1 and 10 µm. In one embodiment, the particles are silicon carbide, calcined alumina or tabular alumina having a median particle size range of less than 6 µm, such as less 5.5 µm or even less than 3 µm. In one embodiment the particles are unground calcined alumina having a median crystallite size of less than 5.5 µm, such as about 2 microns. "Average particle size" refers to the size of about 50 percent or more of the particles in a sample. "Median particle size" refers to the particle size at which half of the distribution is larger and half is smaller; "median crystallite size" is similarly defined, but using the crystallite size rather than the particle size.

Particle size can be determined according to any method known in the art, such as by a conventional particle size analyzer. For example, where the average particle size is greater than 1 µm laser scattering techniques can be employed, and for average particle sizes smaller than 1 µm, transmissional electron microscopy ("TEM") can be used.

The shape or morphology of the particles can vary depending on the type of particle or particles selected. For example, generally spherical particles, such as crystalline materials, solid beads, microbeads, or hollow spheres, can be used, as can particles that are platy, cubic or acicular (that is, elongated or fibrous). The particles can also have a random or nonuniform morphology. In addition, the particles can have an internal structure that is hollow, porous or void free, or any combination, such as a hollow center with porous or solid walls. It will be appreciated that different particle shapes may be more suitable for one application over another. For example, when used with automotive clearcoats, particles having a platy morphology may have better mar resistance than those having spherical or other nonspherical forms. Particle shape may be irrelevant, however, for other applications. It will be appreciated that combinations of particles having different morphologies can be used to give the desired characteristics to the final coating.

The particles should have a hardness sufficient to impart greater protection from mar and/or scratch than would be achieved in a coating made from the same resin but lacking the particles. For example, the particles can have a hardness value greater than the hardness value of materials that can scratch or mar a cured coating, such as dirt, sand, rocks, glass, abrasive cleaners, car wash brushes, and the like. The hardness value of the particles and materials that can scratch or mar a coating can be determined by any conventional hardness measurement method, but is typically determined according to the Mohs hardness scale. The Mohs scale is an empirical scale of the hardness of minerals or mineral-like materials, and indicates the relative scratch resistance of the surface of a material. The original Mohs scale consisted of the values ranging from 1 to 10, with talc having a value of 1 and diamond having a value of 10. The scale has recently been expanded from a maximum value of 10 to a maximum value of 15 to accommodate the addition of some synthetic materials. All of the Mohs hardness values discussed herein, however, are based upon the original 1 to 10 scale.

The Mohs hardness values of several particles within the scope of the invention are given in Table A below.

**Table A**

| PARTICLE MATERIAL | MOHS HARDNESS |
|---|---|
| Silicon nitride | 9+ |
| Zinc oxide | 4.5 |
| Crystalline silica | 6.5 - 7.0 |
| Titanium carbide | 9.0 |
| α-alumina | 9.0 |
| γ-alumina | 8.0 |
| Borosilicate glass | 4.5 - 6.5 |
| Diamond | 10.0 |
| Boron carbide | 9.7 |

Typically, the particles used according to the present invention will have a Mohs hardness of about 4.5 or greater, such as about 5 or greater. For automobile clearcoats, particles having a Mohs hardness of 9 or 10 is often the most suitable. In one embodiment, the Mohs hardness of the particles is between 4.5 and 8, such as between 4.5 and 7.5, or 4.5 and 7.

It will be appreciated that many particles, particularly the inorganic particles, according to the present invention have a hardness at their surface that can be different from the hardness of the internal portions of the particle. The hardness of the surface is typically the hardness relevant to the present invention.

As noted above, the particles or combination of particles used in the present invention should generally have a hardness sufficient to impart improved protection from mar and/or scratch as compared to no particle being present. Accordingly, the present compositions, when cured, will have greater mar and/or scratch resistance than their particle-lacking counterparts. Gloss retention percentages following mar and/or scratch testing ranging from 20 percent up to near 100 percent are achieved, such as 20 percent or greater retention, 50 percent or greater retention, or 70 percent or greater retention. To determine whether improved mar and scratch resistance is obtained with a particular particle or combination of particles, two coating compositions can be formulated, with the only difference being that one contains the present particles and one does not. The coatings can be tested for mar and/or scratch resistance (i.e. "mar and/or scratch testing") by any means standardly known in the art, such as those described in the Example section below. The results for the particle-containing and nonparticle-containing compositions can be compared to determine whether improved resistance is obtained when the selected particles are added. Even a small improvement in any of these tests constitutes an improvement according to the invention. It will be appreciated that mar and scratch resistance, and methods for testing the same, are distinct from "wear-through", weight loss, or bulk-film properties tested, for example, using a Taber abraser, and that such tests are typically relevant to products other than those of the present invention.

The particles are present in the curable coating composition of the present invention in an amount ranging from 0.1 to 8 weight percent, with weight percent based on total weight of the coating composition. In one embodiment, the particles are present in a concentration of greater than 5 weight percent. It will be appreciated that improvement in mar and scratch resistance will increase as the concentration of particles increases. The tests described in the Example section below can be used by those skilled in the art to determine what weight percent or "load" of particles will give the desired level of protection. The particles will be fairly evenly dispersed in the cured coating, that is, there will not typically be an increased concentration of particles in one portion of the cured coating as compared with another.

Both the size of the particles used as well as the particle load can affect not only the level of mar and/or scratch resistance but also the appearance of the cured coating. Thus, particle size and load should be optimized by the user based on the particular application, taking into account, for example, the level of acceptable haze, the level of mar and/or scratch resistance, the thickness of the coating and the like. Where appearance is particularly relevant, such as in an automotive clear coat, a relatively low load and particle size can be used. A load of less than 5 weight percent, even less than 1 weight percent, and a particle size between about 3 to 6 µm is particularly suitable. One skilled in the art can optimize particle size and load to achieve the desired level of mar and/or scratch resistance without compromising the appearance or other mechanical properties of the cured coatings. Mixtures of particles having different sizes may be particularly suitable for a given application.

Haze can also be minimized to at least some degree by selecting resins and particles that have a similar refractive index ("RI"), that is the difference between the resin RI and the particle RI ("Δ RI") is minimized. In some applications, such as for clear coats, the Δ RI can be less than one, or even less than 0.1. Using a combination of particles having different RI's can also help to reduce haze. Minimizing Δ RI is particularly relevant when the particles are larger in size (i.e. greater than about 6 µm). When the RI of the particle is close to the RI of the resin, the particles may comprise greater than 20 weight percent of the present compositions.

In another embodiment of the present invention, in addition to the particles described above, nanoparticles are also incorporated into the present compositions. "Nanoparticles" is used herein to refer to particles having an average particle size from 0.8 to less than 500 nanometers, such as between 10 and 100 nanometers. Such nanoparticles can include both organic and inorganic particulate materials, such as those formed from polymeric and nonpolymeric organic and inorganic materials, composite materials, and mixtures thereof. As used herein, the term "polymeric inorganic material" means a polymeric material having a backbone repeat unit based on an element or elements other than carbon, for example silicon; "polymeric organic materials" means synthetic polymeric materials, semisynthetic polymeric materials and natural polymeric materials, all of which have a backbone repeat unit based on carbon. "Composite material" refers to a combination of two or more different materials that have been combined. The nanoparticles formed from composite materials can have a hardness at their surface that is different from the hardness of the internal portions of the particle. The surface of the nanoparticles can be modified such as by chemically or physically changing its surface characteristics using techniques known in the art. For example, the nanoparticles can be dispersed in siloxane, such as one to which an acid functional group has been added. In addition, a nanoparticle formed from one material can be coated, clad or encapsulated with a different material or different form of the same material to yield a particle having the desired surface characteristics.

The nanoparticles suitable for use in the compositions of the invention can be formed from ceramic materials, metallic materials, or mixtures thereof or can comprise, for example, a core of essentially a single inorganic oxide such as silica in colloidal, fumed, or amorphous form, alumina or colloidal alumina, titanium dioxide, cesium oxide, yttrium oxide, colloidal yttrium, zirconia such as colloidal or amorphous zirconia or mixtures thereof, or an inorganic oxide of one type upon which is deposited an organic oxide of another type. Materials useful in forming the present nanoparticles include graphite, metals, oxides, carbides, nitrides, borides, sulfides, silicates, carbonates, sulfates and hydroxides.

As discussed above, in many applications it will be desired that the use of the present particles and, when employed, the nanoparticles should not significantly interfere with the optical properties of the cured coating composition. Haze can be determined using a BYK/Haze Gloss instrument. The haze of a cured coating both with and without the present particles ("Δ haze value") of less than about 10 or even lower is typically desired for most applications. A Δ haze value of 5 or less is typically desired when using the present compositions as a transparent topcoat.

The powder coating compositions of the present invention may optionally contain additives such as waxes for flow and wetting, flow control agents, such as poly(2-ethylhexyl)acrylate, degassing additives such as benzoin and MicroWax C, adjuvant resin to modify and optimize coating properties, antioxidants, ultraviolet (UV) light absorbers and catalysts. Examples of useful antioxidants and UV light absorbers include those available commercially from Ciba-Geigy under the trademarks IRGANOX^{®} and TINUVIN^{®}. These optional additives, when used, are typically present in amounts up to 20 percent by weight, based on total weight of the coating.

The liquid compositions of the present invention can similarly contain optimal additives such as plasticizers, antioxidants, light stabilizers, UV absorbers, thixotropic agents, anti-gassing agents, organic cosolvents, biocides, surfactants, flow control additives and catalysts. Any such additives known in the art can be used, absent compatibility problems.

The particles of the present invention can be added at any time during the formulation of the powder or liquid coating. For example, curable powder coating compositions of the present invention can be prepared by first dry blending the film-forming resin, the plurality of particles, and any of the additives described above, in a blender, such as a Henschel blade blender. The blender is operated for a period of time sufficient to result in a homogenous dry blend of the materials. The blend is then melt blended in an extruder, such as a twin screw co-rotating extruder, operated within a temperature range sufficient to melt but not gel the components. The melt blended curable powder coating composition is typically milled to an average particle size of from, for example, 15 to 80 µm. Other methods known in the art can also be used.

Alternatively, the present powder compositions can be prepared by blending and extruding the ingredients as described above, but without the present particles. The particles can be added as a post-additive to the formulation, such as through a second extrusion process or by simply mixing the particles into the blended composition, such as by shaking them together in a closed container or using a Henschel mixer. While compositions comprising post-added particles have been surprisingly found to give better mar and/or scratch resistance, ease of use, processibility and appearance are often better when the particles are incorporated into the formulation with the other dry ingredients. The manner of formulating the present compositions can therefore be determined by one skilled in the art depending on the application and desired parameters of the user.

The coating compositions of the invention can be applied to a variety of substrates, for example automotive substrates such as fenders, hoods, doors and bumpers, and industrial substrates such as household appliances, including washer and dryer panels and lids, refrigerator doors and side panels, lighting fixtures and metal office furniture. Such automotive and industrial substrates can be metallic, for example, aluminum and steel substrates, and non-metallic, for example, thermoplastic or thermoset (i.e. "polymeric") substrates.

The powder coating compositions are most often applied by spraying, and in the case of a metal substrate, by electrostatic spraying, or by the use of a fluidized bed. The powder coating can be applied in a single sweep or in several passes to provide a film having a thickness after cure of from 25 to 250 µm (1 to 10 mils), usually 50 to 100 µm (2 to 4 mils). Other standard methods for coating application can be employed such as brushing, dipping or flowing.

The liquid compositions of the invention can also be applied by any conventional method such as brushing, dipping, flow coating, roll coating, conventional and electrostatic spraying. Spray techniques are most often used. Typically, film thickness for liquid coatings can range between 2.5 and 127 µm (0.1 and 5 mils), such as between 2.5 and 25.4 µm (0.1 and 1 mil), or about 10.2 µm (0.4 mils).

Generally, after application of the coating composition, the coated substrate is baked at a temperature sufficient to cure the coating. Metallic substrates with powder coatings are typically cured at a temperature ranging from 121.1°C to 260.0°C (250°F to 500°F) for 1 to 60 minutes, or from 148.9°C to 204.4°C (300°F to 400°F) for 15 to 30 minutes.

Several liquid formulations can be cured at ambient temperature, such as those using a polyisocyanate or polyanhydride curing agent, or they can be cured at elevated temperatures to hasten the cure. An example would be forced air curing in a down draft booth at about 40°C to 60°C, which is common in the automotive refinish industry. The ambient temperature curable compositions are usually prepared as a two (2) package system in which the curing agent is kept separate from the polysiloxane containing the reactive functional group. The packages are combined shortly before application.

The thermally curable liquid compositions such as those using blocked isocyanate, aminoplast, phenoplast, polyepoxide or polyacid curing agent can be prepared as a one-package system. These compositions are cured at elevated temperatures, typically for 1 to 30 minutes at 121°C to 232°C (250°F to 450°F) () with temperature primarily dependent upon the type of substrate used. Dwell time (i.e., time that the coated substrate is exposed to elevated temperature for curing) is dependent upon the cure temperatures used as well as wet film thickness of the applied coating composition. For example, coated automotive elastomeric parts require a long dwell time at a lower cure temperature (e.g., 30 minutes 121°C (250°F), while coated aluminum beverage containers require a very short dwell time at a very high cure temperature (e.g., 1 minute 191°C (375°F)).

The coating compositions of the invention are particularly useful as primers and as color and/or clear coats in color-clear composite coatings. The compositions of the invention in the pigmented form can be applied directly to a substrate to form a color coat. The color coat may be in the form of a primer for subsequent application of a top coat or may be a colored top coat. Alternately, the coating composition of the invention can be unpigmented, in the form of a clearcoat for application over a color coat (either a primer coat or a colored topcoat). When used as a primer coating, thicknesses of 10.2 to 101.6 µm (0.4 to 4.0 mils) are typical. When used as a color topcoat, coating thicknesses of about 12.7 to 101.6 µm (0.5 to 4.0 mils) are usual, and when used as a clearcoat, coating thicknesses of about 38.1 to 101.6 µm (1.5 to 4.0 mils) are generally used.

Accordingly, the present invention is further directed to a substrate coated with one or more of the present compositions. The substrates and compositions, and manner of applying the same, are as described above.

The present invention is further directed to a multi-layer composite coating composition comprising a base coat deposited from a film-forming composition and a topcoat applied over at least a portion of the base coat, where the topcoat is deposited from any of the coating compositions of the present invention. The base coat might have a cured film thickness between 12.5 to 100 µm (0.5 to 4 mils) () while the topcoat cured film thickness can be up to 250 µm (10 mils). The base coat can be cured before application of the topcoat, or the two coats can be cured together. In one example, the base coat can be deposited from a pigmented film-forming composition, while the topcoat formed from the present compositions is substantially transparent. This is the color-plus-clear system discussed above, frequently used in automotive applications.

In yet another embodiment, the present invention is directed to a method for improving the mar and/or scratch resistance of a coated substrate comprising applying the present compositions to at least a portion of the substrate. Application can be by any means known in the art to the thicknesses described above.

The coatings formed according to the present invention have outstanding appearance properties and scratch and mar resistance properties as compared to no particles being present. It has been surprisingly discovered that the compositions of the present invention result in coatings having exceptional resistance to UV degradation. Accordingly, the invention is further directed to a cured coating having particles dispersed throughout, such as a powder coating, having less than 10 percent, such as less than 5 percent or even less than 4 percent, reduction in gloss after 500, 1000, and 1500 hours of QUV exposure. As shown in the Examples below, the coatings of the present invention can even have improved resistance following QUV exposure. "QUV exposure" refers to any type of QUV exposure, such as testing done pursuant to ASTM D-4587.

As used herein, unless otherwise expressly specified all numbers such as those expressing values, ranges, amounts or percentages may be read as if prefaced by the word "about", even if the term does not expressly appear. Also, any numerical range recited herein is intended to include all sub-ranges subsumed therein. As used herein, the term "polymer" refers to oligomers and both homopolymers and copolymers.

### EXAMPLES

For all of the Examples, unless otherwise noted, 20° gloss was measured with a handheld 20° NOVO-GLOSS 20 statistical glossmeter, available from Gardener Instrument Company, Inc.

BON AMI Mar Resistance ("BON AMI") was performed using an Atlas AATCC Mar Tester Model CM-5, available from Atlas Electrical Devices Co. of Chicago, Illinois. Using a felt cloth clamped to the acrylic finger on the arm of the instrument, a set of 10 double rubs (unless indicated otherwise) was run on each panel, which was coated with BON AMI cleanser. The panel was then washed with cool tap water and dried. In the tables below, mar resistance is expressed as a percentage of the 20° gloss that was retained after the surface was marred by the mar tester. Mar resistance was measured as: Mar Resistance = (Marred Gloss ÷ Original Gloss) x 100.

1, 2, and 9µ 3M Abrasive Paper Scratch Resistance ("1, 2 or 9µ Paper") also was performed using the Atlas Tester. A 2" x 2" piece of the 3M Abrasive Paper backed with the felt cloth was clamped to the acrylic finger on the arm of the instrument, and a set of 10 double rubs (unless indicated otherwise) was run on each panel. The panel was then washed with cool tap water and dried. In the tables below, scratch resistance is expressed as the percentage of the 20° gloss that was retained after the surface was scratched by the scratch tester. Scratch resistance was measured as: Scratch Resistance = (Scratched Gloss ÷ Original Gloss) x 100.

BYK Gardner haze was measured using the BYK/Haze Gloss Instrument following manufacturer's instructions.

Steel wool tests were also performed using the Atlas Tester ("steel wool") in the same manner as the scratch tests only using a 2" x 2" piece of the 0000# grade steel wool sheet backed with the felt cloth.

Steel wool tests were also performed using a light hammer (571 grams "light hammer") or heavy hammer (1381 grams "heavy hammer") wrapped with 0000# grade steel wool. In some cases, the heavy hammer had a 1382 gram weight mounted on top. These tests were otherwise performed as described above for the scratch tests. Values repaired in the tables below for the steel wool tests are percent gloss retention.

The following examples are intended to illustrate the invention, and should not be construed as limiting the invention in any way.

### Example 1

Epoxy-acid powder clear coat compositions identified as Samples 1 through 7 in Table I were prepared using the components and amounts (parts by weight) shown, and processed in the following manner. The components were blended in a Henschel Blender for 60 to 90 seconds. The mixtures were then extruded through a Werner & Pfleider co-rotating twin screw extruder at a 450 RPM screw speed and an extrudate temperature of 100°C to 125°C. The extruded material was then ground to a particle size of 17 to 27 µm using an ACM Grinder (Air Classifying Mill from Micron Powder Systems, Summit, New Jersey). Cold rolled steel test panels were coated with PPG Black Electrocoat primer ED5051, fully cured, and were obtained from ACT Laboratories. The finished powders were electrostatically sprayed onto test panels and evaluated for coatings properties as discussed below.

**Table 1**

| | Sample 1 | Sample 2* | Sample 3* | Sample 4 | Sample 5 | Sample 6* | Sample 7* |
|---|---|---|---|---|---|---|---|
| Description | Control Formula (no particles) | 0.1% Diamond Dust MBM 4-8 | 0.3% W610 Zeeospheres | 0.3% WCA-3 alumina platelets | 0.3% WCA-3 + 1.0% Sunspheres 05 | 1.0% Sunspheres 05 | 0.3% W210 Zeeospheres |
| GMA Functional Acrylic¹ | 69.05 | 68.98 | 68.83 | 68.83 | 68.08 | 68.30 | 68.83 |
| DDDA² | 22.68 | 22.65 | 22.60 | 22.60 | 22.35 | 22.43 | 22.60 |
| Benzoin | 0.20 | 0.20 | 0.20 | 0.20 | 0.20 | 0.20 | 0.20 |
| Wax C Micropowder³ | 0.60 | 0.60 | 0.60 | 0.60 | 0.60 | 0.60 | 0.60 |
| Tinuvin 144⁴ | 2.00 | 2.00 | 2.00 | 2.00 | 2.00 | 2.00 | 2.00 |
| CGL-1545⁵ | 2.00 | 2.00 | 2.00 | 2.00 | 2.00 | 2.00 | 2.00 |
| HCA-1⁶ | 2.00 | 2.00 | 2.00 | 2.00 | 2.00 | 2.00 | 2.00 |
| ARMEEN M2C⁷ | 0.37 | 0.37 | 0.37 | 0.37 | 0.37 | 0.37 | 0.37 |
| Acrylic Flow Additive⁸ | 1.10 | 1.10 | 1.10 | 1.10 | 1.10 | 1.10 | 1.10 |

| | Sample 1 | Sample 2 | Sample 3 | Sample 4 | Sample 5 | Sample 6 | Sample 7 |
|---|---|---|---|---|---|---|---|
| Description | Control Formula (no particles) | 0.1 % Diamond Dust MBM 4-8 | 0.3% W610 Zeeospheres | 0.3% WCA-3 alumina platelets | 0.3% WCA-3 + 1.0% Sunspheres 05 | 1.0% Sunspheres 05 | 0.3% W210 Zeeospheres |
| Diamond Dust MBM 4-8⁹ | | 0.10 | | | | | |
| Zeeospheres W610¹⁰ | | | 0.30 | | | | |
| WCA-3 alumina platelets¹¹ | | | | 0.30 | 0.30 | | |
| Zeeospheres W210¹² | | | | | | | 0.30 |
| Sunspheres 05¹³ | | | | | 1.00 | 1.00 | |
| **Total** | 100.00 | 100.00 | 100.00 | 100.00 | 100.00 | 100.00 | 100.00 |

| | | | | | | | |
|---|---|---|---|---|---|---|---|
| * not a sample of the present inventio ¹ 50% Glycidal Methacrylate/10% Butyl Methacrylate/5% Styrene/35% Methyl Methacrylate. ² Dodecanedioic acid. ³ Wax C Micro Powder, a fatty acid amide (ethylene bis-stearoylamide), commercially available from Hoechst-Celanese. ⁴ TINUVIN 144 (2-tert-butyl-2-(4-hydroxy-3,5-di-tert-butylbenzyl)[bis(methyl-2,2,6,6-tetramethyl-4-piperidinyl)]dipropionate), an ultraviolet light stabilizer available from Ciba-Geigy Corp. ⁵ CGL-1545 (2-[4((2-Hydroxy-3-(2-ethylhexyloxy)propyl)-oxy]-2-hydroxyphenyl)-4,6-bis(2,4-dimethylphenyl)-1,3,5-triazine), an ultraviolet light stabilizer available from Ciba-Geigy Corp. ⁶ HCA-1, an anti-yellowing agent (antioxidant) commercially available from Sanko Chemical Corp. ⁷ Methyl dicocaoamine available from Akzo-Nobel Corp., used as a catalyst. ⁸ Acrylic Flow Agent prepared by solution polymerization in xylene and toluene of the following monomers: 81.2% 2- ethyl hexyl acrylate, 11.8% hydroxyl ethyl acrylate, and 7% N,N-dimethylaminoethyl methacrylate. The polymerization was at reflux temperature in the presence of VAZO 67 (2,2'-Azobis-(2-methylbutyronitrile)). The acrylic flow agent was vacuum stripped to 100% solids. ⁹ Diamond Dust MBM 4-8 is commercially available from GE Superabrasives, average particle size 6 microns. ¹⁰ Zeeospheres W-610, solid spheres of a silica-alumina ceramic alloy, are commercially available from 3M Corporation, average particle size 10 microns. ¹¹ WCA-3 alumina platelets are commercially available from Micro Abrasives Corporation, average particle size 3 microns. ¹² Zeeospheres W210, solid spheres of a silica-alumina ceramic alloy, are commercially available from 3M Corporation, average particle size 3 microns. ¹³ Sunspheres 05, fused quartz/borosilicate glass microspheres, are commercially available from MO-SCI Corporation, average particle size 0.6 microns. | | | | | | | |

The powder coatings of Samples 1-7 were applied at 58 to 71 µm (2.3 to 2.8 mils) and cured for 30 minutes at 145°C (293°F). The panels were then subjected to the mar and scratch tests indicated in the tables below. A number of control panels were prepared. Generally, Samples 2-7, which represent compositions according to the present invention, performed better in all tests as compared to Sample 1, which did not include the present particles.

**Table 2**

| Mar/Scratch Resistance Test | Sample 1 Control | Sample 2* 0.1 % Diamond Dust | Sample 6* 1.0% Sunspheres | Sample 7* 0.3% Zeeospheres W-210 |
|---|---|---|---|---|
| BON AMI | 57 | 61 | 79 | 83 |
| 1µ pamper | 63 | 90 | 67 | 86 |
| 2µ paper | 52 | 91 | 63 | 72 |
| 9µ paper | 8 | 67 | 8 | 9 |

| | | | | |
|---|---|---|---|---|
| * not an example of the present invention | | | | |

The results of Table 2 demonstrate that nonuniform particles present in a concentration as low as 0.1 weight percent provides enhanced mar and scratch protection (Sample 2); improvement is seen with spherical particles as well (Samples 6 and 7).

**Table 3**

| Mar/Scratch Resistance Test | Sample 3* 0.3% Zeeospheres 610 | Sample 1 Control |
|---|---|---|
| BON AMI | 73 | 61 |
| 1µ paper | 88 | 55 |
| 9µ paper | 15 | 8 |

| | | |
|---|---|---|
| * not an example of the present invention | | |

The results of Table 3 demonstrate improved resistance with particles having an average particle size of 10µ (Sample 3).

**Table 4**

| Mar/Scratch Resistance Test | Sample 4 0.3% WCA-3 | Sample 5 0.3% WCA-3 + 1.0% Sunspheres 05 | Sample 1 Control |
|---|---|---|---|
| BON AMI | 88 | 98 | 57 |
| 1µ paper | 94 | 96 | 47 |
| 2µ paper | 90 | 89 | 50 |
| 9µ paper | 21 | 13 | 6 |

The results of Table 4 demonstrate that a blend of particles may also be used to improve mar and scratch resistance. The blend of particles (Sample 5) gave results, particularly for mar resistance, that were improved over those obtained with the individual particles, Sample 4 and Sample 6 (shown in Table 2). In all cases use of particles gave improved mar resistance when compared with control (Sample 1).

### Example 2 (not an example according to the present invention)

Powder clearcoats were prepared as described for Sample 3 in Example 1 only using either 0.3 weight percent zinc oxide (Mohs hardness of 5, Aldrich Chemical, 0.5µ average particle size), Sample 8, or 0.3 weight percent diamond particles (Mohs hardness of 10, GE Superabrasives, 6µ average particle size), Sample 9. Sample 10 was prepared using the same components and weights as Sample 8, but with addition of the zinc oxide after extrusion. That is, the ZnO particles were mixed until incorporated into the formulation following the grinding step with a Henschel mixer. Test panels were prepared and tested as described above. Results are presented in Tables 5 and 6 below.

**Table 5**

| Mar/Scratch Resistance Test | Sample 1 | Sample 8 0.3% ZnO | Sample 10 0.3 wt.% ZnO (post added) |
|---|---|---|---|
| BON AMI | 49 | 59 | 80 |
| 1µ paper | 61 | 64 | 65 |
| 2µ paper | 46 | 62 | 58 |
| 9µ paper | 6 | 6 | 5 |

Both the pre-added ZnO (Sample 8) and post-added ZnO (Sample 10) imparted greater overall mar and scratch resistance as compared to the control (Sample 1).

**Table 6**

| Mar/Scratch Resistance Test | Sample 9 0.3 wt.% diamond | Sample 1 |
|---|---|---|
| BON AMI | 77 | 35 |
| 1µ paper | 88 | 53 |
| 2µ paper | 92 | 50 |
| 9µ paper | 84 | 6 |

The results of Table 6, when compared with the results shown for Sample 2 in Table 2, demonstrate that the higher the diamond particle weight percent the greater the resistance, as compared with control samples lacking any particles.

### Example 3

Sample 11 was prepared as generally described in Example 1, using the amounts shown in Table 7. Test panels were prepared and tested, also as described above, and compared with Control Sample 1. These results are presented in Table 8.

**Table 7**

| Description | Wt.% |
|---|---|
| GMA Functional Acrylic | 63.03 |
| DDDA | 20.70 |
| Acrylic Flow Additive | 1.10 |
| Benzoin | 0.2 |
| Wax C Micropowder | 0.6 |
| Tinuvin 144 | 2.0 |
| CGL-1545 | 2.0 |
| HCA-1 | 2.0 |
| ARMEEN M2C | 0.37 |
| WCA3 alumina platelets | 8.0 |

**Table 8**

| Mar/Scratch Resistance Test | Sample 11 8 wt.% alumina | Sample 1 |
|---|---|---|
| BON AMI | 94 | 51 |
| 1µ paper | 98 | 66 |
| 2µ paper | 98 | 61 |
| 9µ paper | 60 | 8 |

The results of Table 8 demonstrate dramatic improvement in mar and scratch resistance when using 8 weight percent alumina platelets as compared with Control Sample 1, lacking the particles.

### Example 4

Samples 12 and 13 were prepared as described above for Samples 8 and 10, only using an α-alumina, nonspherical particle having an average particle size of 0.5µ instead of ZnO. Test panels were coated as described above. As demonstrated in Table 9, performance of pre-addition (Sample 12) and post-addition (Sample 13) formulations greatly exceeded that of Control Sample 1.

**Table 9**

| Mar/Scratch Resistance Test | Sample 12 0.3 wt.% alumina pre-added | Sample 13 0.3 wt.% alumina post-added | Sample 1 |
|---|---|---|---|
| BON AMI | 89 | 89 | 49 |
| 1µ paper | 74 | 74 | 61 |
| 2µ paper | 67 | 64 | 46 |
| 9µ paper | 7 | 7 | 6 |

### Example 5 (not an example according to the present invention)

Samples 15-17 were prepared as described in Example 1 using the components and weight percents shown in Table 10.

**Table 10**

| Description | Sample 15 Control | Sample 16 wt.% silica | Sample 17 wt.% silica |
|---|---|---|---|
| GMA acrylic resin¹⁴ | 79.18 | 77.52 | 77.52 |
| DDDA | 17.41 | 17.02 | 17.02 |
| Benzoin | 0.38 | 0.37 | 0.37 |
| Triphenyltinhydroxide catalyst | 0.98 | 0.96 | 0.96 |
| Wax C Micropowder | 0.53 | 0.52 | 0.52 |
| Modaflow¹⁵ | 0.90 | 0.88 | 0.88 |
| Goresil 210¹⁶ | -- | 2.21 | -- |
| Goresil 25¹⁷ | -- | -- | 2.21 |

| | | | |
|---|---|---|---|
| ¹⁴ Almatex PD 9060 produced by Anderson Development Company. ¹⁵ Modaflow, an acrylic copolymer flow additive anti-crater additive commercially available from Solutia, Inc. ¹⁶ Silica particles, average particle size 2µ, largest particle size 10µ, commercially available from C.E.D. Process Minerals, Inc. ¹⁷ Silica particles, average particle size 2µ, largest particle size 5µ, commercially available from C.E.D. Process Minerals, Inc. | | | |

Panels coated with Samples 15-17 were subjected to the BON AMI and steel wool tests described above. Results are presented in Table 11. Gloss retention, i.e. resistance, was greatly improved with both silicas; the smaller silica (Sample 17) gave a haze value that is more desirable in a clear coat application without compromising performance.

**Table 11**

| Description | Sample 15 | Sample 16 | Sample 17 |
|---|---|---|---|
| Initial 20° gloss | 83 | 79 | 82 |
| BYK Gardner haze | 36 | 84 | 39 |
| BON AMI (20 double rubs) | 82 | 98 | 98 |
| Steel wool 0000# grade double rubs (10x, light hammer) | 57 | 96 | 91 |
| Steel wool 0000# grade double rubs (5x, light hammer) | 74 | 97 | 95 |

### Example 6

Samples 18-21 were prepared and tested as those of Example 5, using the components and weight percent shown in Table 12.

**Table 12**

| Description | Sample 18 | Sample 19 | Sample 20 | Sample 21 |
|---|---|---|---|---|
| GMA acrylic resin | 79.76 | 77.98 | -- | -- |
| GMA/IBoMA Acrylic Resin¹⁸ | -- | -- | 81.63 | 83.49 |
| DDDA | 17.51 | 17.12 | 13.48 | 13.78 |
| Benzoin | 0.38 | 0.38 | 0.37 | 0.38 |
| Triphenyltinhydroxide catalyst | 0.91 | 0.89 | 0.89 | 0.91 |
| Wax C Micropowder | 0.53 | 0.52 | 0.52 | 0.53 |
| Modaflow | 0.91 | 0.89 | 0.89 | 0.91 |
| Goresil 25 | -- | 2.22 | 2.22 | -- |

| | | | | |
|---|---|---|---|---|
| ¹⁸ Acrylic copolymer with 40% glycidyl methacrylate and 60% isobornyl methacrylate | | | | |

Samples 18 and 19 were formulated with GMA Acrylic Resin and Samples 20 and 21 with GMA/IBoMA Acrylic Resin, which has a lower RI than the GMA Acrylic Resin. Samples 19 and 20 contained Goresil 25, while Samples 18 and 21 provided a control lacking the particle. The results in Table 13 demonstrate that the Δ haze value can be reduced when using a resin that has a RI closer to that of the particle used. The Δ haze for the GMA resin (particle vs. no particle) was 16, while then haze for the GMA/IBoMA was only 8. The samples containing particles according to the present invention had improved performance over control samples.

**Table 13**

| Description | Sample 18 | Sample 19 | Sample 20 | Sample 21 |
|---|---|---|---|---|
| Initial 20° gloss | 83 | 81 | 79 | 80 |
| BYK Gardner haze | 24 | 40 | 33 | 25 |
| BON AMI (20x) | 50 | 80 | 44 | 33 |
| BON AMI (40x) | 64 | 85 | 72 | 53 |
| Steel wool 0000# grade double rubs (5x, light hammer) | 76 | 96 | 75 | 59 |

### Example 7(not an example according to the present invention)

Samples 22-25 were prepared and tested as described in Example 5 using the components and weight percent shown in Table 14.

**Table 14**

| Description | Sample 22 | Sample 23 | Sample 24 | Sample 25 |
|---|---|---|---|---|
| GMA acrylic resin | 79.76 | 75.20 | 69.81 | 73.72 |
| DDDA | 17.51 | 16.51 | 15.33 | 16.19 |
| Benzoin | 0.38 | 0.36 | 0.33 | 0.35 |
| Triphenyltinhydroxide catalyst | 0.91 | 0.86 | 0.80 | 0.84 |
| Wax C Micropowder | 0.53 | 0.50 | 0.46 | 0.49 |
| Modaflow | 0.91 | 0.86 | 0.80 | 0.84 |
| Goresil 25 | -- | 5.72 | 5.31 | -- |
| Nanoparticles¹⁹ | -- | -- | 7.17 | 7.57 |

| | | | | |
|---|---|---|---|---|
| ¹⁹ Nanoparticles were obtained from Clariant Corporation and dispersed in an acid functional material. | | | | |

Results presented in Table 15 demonstrate that the formulations comprising only micro-sized particles (Sample 23) and only nano-sized particles in acid functional siloxane (Sample 25) performed better than Control, and that the best overall performance was seen when both particles were present (Sample 24).

**Table 15**

| Description | Sample 22 | Sample 23 | Sample 24 | Sample 25 |
|---|---|---|---|---|
| Initial 20° gloss | 82 | 77 | 77 | 82 |
| 9µ paper | 22 | 33 | 56 | 50 |
| 3µ paper | 38 | 53 | 75 | 77 |
| 2µ paper | 77 | 87 | 93 | 81 |
| BON AMI (20 times) | 72 | 90 | 93 | 81 |
| Steel wool 0000# grade double rubs (5x, heavy hammer) | 77 | 100 | 96 | 82 |

### Example 8

Samples 26-29 were prepared using an acid functional polyester resin containing the components in the weights shown in Table 16. The Samples were tested as described above, only using cold rolled steel panels with an iron phosphate pretreatment, obtained from ACT Laboratories.

**Table 16**

| Description | Sample 26 | Sample 27* | Sample 28* | Sample 29 |
|---|---|---|---|---|
| Albester 5150²⁰ | 72.80 | 64.41 | 64.41 | 64.41 |
| TGIC²¹ | 5.30 | 4.69 | 4.69 | 4.69 |
| SCX-819²² | 3.04 | 2.69 | 2.69 | 2.69 |
| PL-200²³ | 1.10 | 0.97 | 0.97 | 0.97 |
| Benzoin | 0.80 | 0.71 | 0.71 | 0.71 |
| KC-59-9200²⁴ | 0.45 | 0.40 | 0.40 | 0.40 |
| KH-97-3788²⁵ | 0.35 | 0.31 | 0.31 | 0.31 |
| Monarch 1300²³ | 1.56 | 1.38 | 1.38 | 1.38 |
| Vansil W-50²⁷ | 14.60 | 12.91 | 12.91 | 12.91 |
| Goresil 25 | -- | 11.53 | -- | -- |
| Goresil 210 | -- | -- | 11.53 | -- |
| NABALOX 713-10²⁸ | -- | -- | -- | 11.53 |

| | | | | |
|---|---|---|---|---|
| * not a sample according to the invention ²⁰ Acid functional polyester resin, obtained from McWhorter Technologies. ²¹ Triglycidylisocyanurate, commercially available from Cytec Corporation. ²² Acid functional acrylic, used as anti-crater additive, commercially available from Johnson Polymer. ²³ Flow additive, high molecular weight acrylic suspended in silica, commercially available from Eston Chemical, Inc. ²⁴ Actiron 32-057, commercially available from Synthron, Inc. ²⁵ Anti-crater additive, imide hydroxy urethane resin powder. ²⁶ Carbon black pigment, commercially available from Cabot Corporation. ²⁷ Extender, wollastonite, commercially available from R.T. Vanderbilt Company, Inc. ²⁸ α-alumina, average particle size 0.55 microns, commercially available from Baikowski International. | | | | |

**Table 17**

| Description | Sample 26 | Sample 27* | Sample 28* | Sample 29 |
|---|---|---|---|---|
| Initial 20° gloss | 30 | 26 | 23 | 32 |
| BYK Gardner haze | 486 | 475 | 483 | 479 |
| 9µ paper | 32 | 44 | 54 | 46 |
| 3µ paper | 64 | 83 | 88 | 84 |
| 2µ paper | 104 | 126 | 126 | 117 |
| BON AMI (10 x) | 71 | 106 | 99 | 88 |
| Steel wool 0000# grade double rubs (30x, heavy hammer) | 94 | 126 | 135 | 109 |

| | | | | |
|---|---|---|---|---|
| * not a sample according to the invention | | | | |

As demonstrated in Table 17, the Samples 27-29 performed better in all tests as compared with the Control, Sample 26. A variety of resin types, including those containing pigments, are suitable for use in the present invention.

### Example 9 (not an example according to the present invention)

Liquid coating compositions (Samples 30-32) were prepared using the components listed in Table 18.

**Table 18**

| Description | Sample 30 | Sample 31 | Sample 32 |
|---|---|---|---|
| Nanoparticles²⁰ | 4.50 | 4.41 | 4.31 |
| Methyl amyl ketone³⁰ | 24.30 | 23.78 | 23.29 |
| Acrylic resin³¹ | 37.75 | 36.95 | 36.18 |
| Solvent³² | 5.74 | 5.62 | 5.50 |
| Butyl cellosolve acetate³³ | 1.04 | 1.02 | 1.00 |
| Particle paste³⁴ | -- | 2.13 | 4.17 |
| Isocyanate crosslinker³⁵ | 26.60 | 26.04 | 25.49 |
| Tin catalyst³⁶ | 0.06 | 0.06 | 0.06 |

| | | | |
|---|---|---|---|
| ²⁹ 30% nano silica particles/70% siloxane. ³⁰ Eastman Chemicals. ³¹ Acrylic resin having hydroxyl functionality. ³² Exxate 600 solvent (hexyl acetate) from Union Carbide. ³³ Union Carbide. ³⁴63.4% particle paste prepared by mixing the following: Goresil 25 56.0 grams (35.65%) Methyl amyl ketone 21.0 grams (13.37%) Acrylic resin having hydroxyl functionality 10.0 grams (3.37%) Solsperse 2400, commercially available from Avecia 56.0 grams (35.65%) 1 mm Zircoa beads 70.0 grams (44.56%) ³⁵ HDTLV, from Rhodia Inc. ³⁶ Metacure T-12 catalyst, commercially available from Air Products and Chemicals, Inc. | | | |

The components of the particle paste were sealed in an eight ounce jar and shaken on a paint shaker for 3.5 hours to disperse the particle paste. The grind media was filtered out and the material was ready to use. The above ingredients were mixed and sprayed within 10 minutes due to the short pot life, which is normal for refinish two-pack systems.

The ED5051 black primer panels described in Example 1 were hand sprayed at 3.1 10⁵ Pa (45 ps, 22°C (71.6°F), and 63 percent relative humidity, and air cured. Panels were tested after one week to provide sufficient cure. The tests performed and results are shown in Table 19.

**Table 19**

| Description | Sample 30 | Sample 31 | Sample 32 |
|---|---|---|---|
| Initial 20° gloss | 83.1 | 81.8 | 81.7 |
| 9µ paper | 51 | 46 | 67 |
| 3µ paper | 66 | 73 | 78 |
| 2µ paper | 84 | 90 | 89 |
| BON AMI | 79 | 96 | 94 |
| Steel wool 0000# (10 x); Atlas tester | 62 | 84 | 76 |

Use of the present particles in the liquid coating system (Samples 31 and 32) imparted improved mar and scratch when compared with the Control (Sample 30).

### Example 10(not an example according to the present invention)

Panels were coated and tested as described in Example 1, using the coatings set forth in Table 20. Particle load was 0.3% for Samples 34-36, and 0.1 % for Sample 37. The panels were subjected to QUV exposure for 500, 1000 or 1500 hours according to ASTM D-4587. As illustrated in the table, the present compositions containing particles showed improved scratch resistance following QUV exposure as compared with the control lacking particles, and in many cases scratch resistance improved as the length of QUV exposure increased. The results in the table are given in % gloss retention using 20° gloss.

**Table 20**

| | Sample 33 DJ55³⁷ | Sample 34 DJ55 W210 | Sample 35 DJ55 WCA3 | Sample 36 DJ55 Goresil 25 | Sample 37 DJ55 Diamond Dust MBM 4-8 |
|---|---|---|---|---|---|
| 2µ paper initial | 62.6 | 72.2 | 90.3 | 72.9 | 85.9 |
| 500 hours | 77.4 | 94.1 | 96.9 | 95.6 | 93.1 |
| 1000 hours | 76 | 94.7 | 94.3 | 91.7 | 94.6 |
| 1500 hours | 92.8 | 92.2 | 97.4 | 97.6 | 91.1 |
| | | | | | |
| 9la paper initial | 13.6 | 20.1 | 28.2 | 19.0 | 77.7 |
| 500 hours | 11.7 | 17.6 | 45 | 17 | 77.7 |
| 1000 hours | 21.9 | 20 | 57 | 30.4 | 82.4 |
| 1500 hours | 40.1 | 35.6 | 72.5 | 42.7 | 68.1 |

| | | | | | |
|---|---|---|---|---|---|
| ³⁷ Acrylic powder coating, commercially available from PPG Industries, Inc. | | | | | |

### Example 11

Samples 38-44 were prepared and tested as described in Example 5, using the components shown in Table 21. The use of heat-treated particles (Samples 42, 43 and 44) generally gave better results than their non-heat treated counterparts (Samples 39, 40 and 41, respectively), which still gave better performance overall than control Sample 38, which had no particles.

**Table 21**

| | Sample 38* | Sample 39* | Sample 40 | Sample 41 * | Sample 42* | Sample 43* | Sample 44* |
|---|---|---|---|---|---|---|---|
| GMA acrylic resin | 79.76 | 77.98 | 77.98 | 77.98 | 77.98 | 77.98 | 77.98 |
| DDDA | 17.51 | 17.12 | 17.12 | 17.12 | 17.12 | 17.12 | 17.12 |
| Wax C Micropowder | 0.53 | 0.52 | 0.52 | 0.52 | 0.52 | 0.52 | 0.52 |
| Benzoin | 0.38 | 0.37 | 0.37 | 0.37 | 0.37 | 0.37 | 0.37 |
| Triphenyltrihydroxide catalyst | 0.91 | 0.89 | 0.89 | 0.89 | 0.89 | 0.89 | 0.89 |
| Modaflow | 0.91 | 0.89 | 0.89 | 0.89 | 0.89 | 0.89 | 0.89 |
| Sunspheres 05 | -- | 2.22 | -- | -- | -- | -- | -- |
| T64-20³⁸ | -- | -- | 2.22 | -- | -- | -- | -- |
| Zeeospheres W210 | -- | -- | -- | 2.22 | -- | -- | -- |
| HT³⁹ Sunspheres 05 | -- | -- | -- | -- | 2.22 | -- | -- |
| HT T64-20 | -- | -- | -- | -- | -- | 2.22 | -- |
| HT Zeeospheres W210 | -- | -- | -- | -- | -- | -- | 2.22 |
| Initial 20° gloss | 83.0 | 82.8 | 79.1 | 77.1 | 82.7 | 79.1 | 76.9 |
| 9µ paper | 13.6 | 16.7 | 62.5 | 44.4 | 28.4 | 67.8 | 50.3 |
| 3µ paper | 31.1 | 29.7 | 83.3 | 77.4 | 57.9 | 88.5 | 76.7 |
| BON AMI (20x) | 79.4 | 93.8 | 92.6 | 97.5 | 96.4 | 94.6 | 98.1 |
| Steel wool 0000# gauge (5x, light hammer) | 83.1 | 87.8 | 92.8 | 98.8 | 95.8 | 97.7 | 98.8 |
| Steel wool 0000# gauge (5x, heavy hammer) | 83.0 | 87.6 | 91.2 | 97.1 | 90.7 | 95.2 | 97.5 |

| | | | | | | | |
|---|---|---|---|---|---|---|---|
| * not a sample according to the invention ³⁸ Tabular alumina, 7µ average particle size, maximum particle size 20µ, commercially available from Alcoa. ³⁹ "HT" = heat treated for three hours at 700°C. * not a sample according to the present imvention | | | | | | | |

## Claims

1. A curable powder coating composition comprising:
a film-forming resin comprising at least one polymer having at least one type of reactive functional group and a curing agent having functional groups reactive with the functional group of the polymer; and
a plurality of inorganic particles selected from alumina particles having an average particle size between 0.1 and 6 µm and silicon carbide particles having an average particle size between 0.1 and 10 µm dispersed in said resin in an amount of 0.1 to 8 weight percent based on the total weight of the coating composition.

2. The coating composition of Claim 1, wherein said particles are silicon carbide particles.

3. The coating composition of Claim 1, wherein said particles are silicon carbide particles having a median particle size of less than 3 µm.

4. The coating composition of Claim 1, wherein said particles are calcined or tabular alumina.

5. The coating composition of Claim 4, wherein said particles are calcined unground alumina having a median crystallite size less than 5.5 µm.

6. The coating composition of Claim 1, wherein said particles are calcined ground alumina having a median particle size of less than 3 µm.

7. The coating composition of Claim 1, wherein said particles are spherical.

8. The coating composition of Claim 1, wherein said particles are nonuniform.

9. The coating composition of Claim 1, wherein said particles are platy.

10. The coating composition of Claim 1, wherein said particles are calcined.

11. The coating of Claim 1, wherein said particles are heat treated prior to being dispersed in said resin.

12. The coating composition of Claim 1, wherein the polymer is selected from acrylic polymers, polyester polymers, polyurethane polymers, and polyether polymers.

13. The coating composition of Claim 12, wherein the polymer comprises reactive functional groups selected from epoxy groups, carboxylic acid groups, hydroxyl groups, isocyanate groups, amide groups, carbamate groups, carboxylate groups and mixtures thereof.

14. A substrate coated with a coating resulting from a coating composition of any of claims 1-13.

15. The substrate of Claim 14, wherein said substrate is metallic.

16. The substrate of Claim 14, wherein said substrate is polymeric.

17. The substrate of Claim 14, wherein one or more additional layers are disposed between the substrate and the coating.

18. The substrate of Claim 14, wherein the coating is between 2.54 and 254 µm (0.1 and 10 mils) thick.

19. A method for improving the scratch and/or mar resistance of a substrate comprising applying to at least a portion of the substrate the coating composition of any of Claims 1-13.

20. A multi-layer composite coating comprising a base coat deposited from a film-forming composition and a top coat applied over at least a portion of the base coat, where the top coat is deposited from a coating composition according to any of claims 1-13.

21. A method for preparing a powder coating composition comprising the step of extruding together a film-forming resin comprising at least one polymer having at least one type of reactive functional group and a curing agent having functional groups reactive with the functional group of the polymer; and a plurality of inorganic particles selected from alumina particles having an average particle size between 0.1 and 6 µm and silicon carbide particles having an average particle size between 0.1 and 10 µm dispersed in said resin in an amount of 0.1 to 8 weight percent based on the total weight of the coating composition.

22. A cured powder coating obtained from a powder coating composition prepared according to the method of claim 21.

## Patentansprüche

1. Härtbare Pulverbeschichtungszusammensetzung enthaltend: ein filmbildendes Harz, das wenigstens ein Polymer mit wenigstens einer Art von reaktiver funktioneller Gruppe und ein Härtungsmittel mit funktionellen Gruppen, die mit den funktionellen Gruppen reaktiv sind, enthält, und eine Vielzahl von anorganischen Teilchen, ausgewählt aus Aluminiumoxidteilchen mit einer mittleren Teilchengröße zwischen 0,1 und 6 µm und Siliciumcarbidteilchen mit einer mittleren Teilchengröße zwischen 0,1 und 10 µm, die in diesem Harz in einer Menge von 0,1 bis 8 Gew.-%, bezogen auf das Gesamtgewicht der Beschichtungszusammensetzung dispergiert sind.

2. Beschichtungszusammensetzung nach Anspruch 1, wobei diese Teilchen Siliciumcarbidteilchen sind.

3. Beschichtungszusammensetzung nach Anspruch 1, wobei diese Teilchen Siliciumcarbidteilchen mit einer Medianteilchengröße von weniger als 3 µm sind.

4. Beschichtungszusammensetzung nach Anspruch 1, wobei diese Teilchen calciniertes oder tafelförmiges Aluminiumoxid sind.

5. Beschichtungszusammensetzung nach Anspruch 4, wobei diese Teilchen calciniertes ungemahlenes Aluminiumoxid mit einer Mediankristallitgröße von weniger als 5,5 µm sind.

6. Beschichtungszusammensetzung nach Anspruch 1, wobei diese Teilchen calciniertes gemahlenes Aluminiumoxid mit einer Medianteilchengröße von weniger als 3 µm sind.

7. Beschichtungszusammensetzung nach Anspruch 1, wobei diese Teilchen sphärisch sind.

8. Beschichtungszusammensetzung nach Anspruch 1, wobei diese Teilchen uneinheitlich sind.

9. Beschichtungszusammensetzung nach Anspruch 1, wobei diese Teilchen plättchenförmig sind.

10. Beschichtungszusammensetzung nach Anspruch 1, wobei diese Teilchen calciniert sind.

11. Beschichtungszusammensetzung nach Anspruch 1, wobei diese Teilchen wärmebehandelt werden, bevor sie in dieses Harz dispergiert werden.

12. Beschichtungszusammensetzung nach Anspruch 1, wobei das Polymer ausgewählt ist aus Acrylpolymeren, Polyesterpolymeren, Polyurethanpolymeren und Polyetherpolymeren.

13. Beschichtungszusammensetzung nach Anspruch 12, wobei das Polymer reaktive funktionelle Gruppen enthält, die ausgewählt sind aus Epoxygruppen, Carbonsäuregruppen, Hydroxylgruppen, Isocyanatgruppen, Amidgruppen, Carbamatgruppen, Carboxylatgruppen und Mischungen davon.

14. Substrat beschichtet mit einer Beschichtung resultierend aus einer Beschichtungszusammensetzung nach einem der Ansprüche 1 bis 13.

15. Substrat nach Anspruch 14, wobei dieses Substrat metallisch ist.

16. Substrat nach Anspruch 14, wobei dieses Substrat ein Polymer ist

17. Substrat nach Anspruch 14, wobei eine oder mehrere zusätzliche Schichten zwischen dem Substrat und der Beschichtung angeordnet sind.

18. Substrat nach Anspruch 14, wobei dies Beschichtung zwischen 2,54 und 254 µm (0,1 und 10 mils) dick ist.

19. Verfahren zur Verbesserung der Kratz- und/oder Abriebbeständigkeit eines Substrats, umfassend Aufbringen der Beschichtungszusammensetzung nach einem der Ansprüche 1 bis 13 auf wenigstens einen Teil des Substrats.

20. Mehrschichtige Verbundbeschichtung, umfassend einen Basislack, der aus einer filmbildenden Zusammensetzung abgeschieden ist, und einen Decklack, der auf wenigstens einen Teil des Basislacks aufgebracht ist, wobei der Decklack aus einer Beschichtungszusammensetzung gemäß einem der Ansprüche 1 bis 13 aufgebracht ist.

21. Verfahren zur Herstellung einer Pulverbeschichtungszusammensetzung, umfassend den Schritt des gemeinsamen Extrudierens eines filmbildenden Harzes, das wenigstens ein Polymer mit wenigstens einer Art von reaktiver funktioneller Gruppe und ein Härtungsmittel mit funktionellen Gruppen, die mit den funktionellen Gruppen des Polymers reaktiv sind, enthält, und einer Vielzahl von anorganischen Teilchen, ausgewählt aus Aluminiumoxidteilchen mit einer mittleren Teilchengröße zwischen 0,1 und 6 µm und Siliciumcarbidteilchen mit einer mittleren Teilchengröße zwischen 0,1 und 10 µm, dispergiert in diesem Harz in einer Menge von 0,1 bis 8 Gew.-%, bezogen auf das Gesamtgewicht der Beschichtungszusammensetzung.

22. Eine gehärtete Pulverbeschichtung, die aus einer Pulverbeschichtungszusammensetzung erhalten wird, die gemäß dem Verfahren nach Anspruch 21 hergestellt wurde.

## Revendications

1. Composition de revêtement en poudre durcissable comprenant :
une résine formant film comprenant au moins un polymère ayant au moins un type de groupe fonctionnel réactif et un agent durcisseur ayant des groupes fonctionnels réactifs avec le groupe fonctionnel du polymère ; et
une pluralité de particules inorganiques choisies parmi des particules d'alumine ayant une taille de particule moyenne comprise entre 0,1 et 6 µm et des particules de carbure de silicium ayant une taille de particule moyenne comprise entre 0,1 et 10 µm dispersées dans ladite résine dans une quantité de 0,1 à 8 % en poids sur la base du poids total de la composition de revêtement.

2. Composition de revêtement selon la revendication 1, dans laquelle lesdites particules sont des particules de carbure de silicium.

3. Composition de revêtement selon la revendication 1, dans laquelle lesdites particules sont des particules de carbure de silicium ayant une taille de particule médiane inférieure à 3 µm.

4. Composition de revêtement selon la revendication 1, dans laquelle lesdites particules sont de l'alumine calcinée ou tabulaire.

5. Composition de revêtement selon la revendication 4, dans laquelle lesdites particules sont de l'alumine calcinée non broyée ayant une taille de cristallite médiane inférieure à 5,5 µm.

6. Composition de revêtement selon la revendication 1, dans laquelle lesdites particules sont de l'alumine calcinée broyée ayant une taille de particule médiane inférieure à 3 µm.

7. Composition de revêtement selon la revendication 1, dans laquelle lesdites particules sont sphériques.

8. Composition de revêtement selon la revendication 1, dans laquelle lesdites particules sont non uniformes.

9. Composition de revêtement selon la revendication 1, dans laquelle lesdites particules sont lamellaires.

10. Composition de revêtement selon la revendication 1, dans laquelle lesdites particules sont calcinées.

11. Revêtement selon la revendication 1, dans lequel lesdites particules sont traitées thermiquement avant d'être dispersées dans ladite résine.

12. Composition de revêtement selon la revendication 1, dans laquelle le polymère est choisi parmi les polymères acryliques, les polymères de polyester, les polymères de polyuréthane et les polymères de polyéther.

13. Composition de revêtement selon la revendication 12, dans laquelle le polymère comprend des groupes fonctionnels réactifs choisis parmi les groupes époxydes, les groupes acides carboxyliques, les groupes hydroxyles, les groupes isocyanates, les groupes amides, les groupes carbamates et les mélanges de ceux-ci.

14. Substrat revêtu d'un revêtement résultant d'une composition de revêtement selon l'une quelconque des revendications 1 à 13.

15. Substrat selon la revendication 14, dans lequel ledit substrat est métallique.

16. Substrat selon la revendication 14, dans lequel ledit substrat est polymère.

17. Substrat selon la revendication 14, dans lequel une ou plusieurs couches supplémentaires sont disposées entre le substrat et le revêtement.

18. Substrat selon la revendication 14, dans lequel le revêtement est compris entre 2,54 et 254 µm (0,1 et 10 mils) d'épaisseur.

19. Procédé permettant d'améliorer la résistance aux rayures et/ou à l'endommagement d'un substrat comprenant l'application à au moins une partie du substrat de la composition de revêtement selon l'une quelconque des revendications 1 à 13.

20. Revêtement composite multicouche comprenant une couche de base déposée à partir d'une composition formant film et une couche de finition appliquée sur au moins une partie de la couche de base, où la couche de finition est déposée à partir d'une composition de revêtement selon l'une quelconque des revendications 1 à 13.

21. Procédé de préparation d'une composition de revêtement en poudre comprenant l'étape d'extrusion conjointe d'une résine formant film comprenant au moins un polymère ayant au moins un type de groupe fonctionnel réactif et d'un agent durcisseur ayant des groupes fonctionnels réactifs avec le groupe fonctionnel du polymère ; et
une pluralité de particules inorganiques choisies parmi des particules d'alumine ayant une taille de particule moyenne comprise entre 0,1 et 6 µm et des particules de carbure de silicium ayant une taille de particule moyenne comprise entre 0,1 et 10 µm dispersées dans ladite résine dans une quantité de 0,1 à 8 % en poids sur la base du poids total de la composition de revêtement.

22. Revêtement en poudre durci obtenu à partir d'une composition de revêtement en poudre préparée selon le procédé de la revendication 21.
